Europäisches Patentamt

European Patent Office

Office européen des brevets

(11) Veröffentlichungsnummer: **0 134 548**
**B1**

(12) # EUROPÄISCHE PATENTSCHRIFT

(45) Veröffentlichungstag der Patentschrift:
**11.05.88**

(51) Int. Cl.⁴: **F 16 D 35/00**

(21) Anmeldenummer: **84109326.3**

(22) Anmeldetag: **07.08.84**

(54) Flüssigkeitsreibungskupplung.

(30) Priorität: **16.08.83 DE 8323498 U**

(43) Veröffentlichungstag der Anmeldung:
**20.03.85 Patentblatt 85/12**

(45) Bekanntmachung des Hinweises auf die Patenterteilung:
**11.05.88 Patentblatt 88/19**

(84) Benannte Vertragsstaaten:
**DE FR GB IT SE**

(56) Entgegenhaltungen:
**EP - A - 0 070 111**
**DE - A - 2 009 268**
**DE - A - 2 943 841**
**FR - A - 2 315 000**

(73) Patentinhaber: **Süddeutsche Kühlerfabrik Julius Fr. Behr GmbH & Co. KG, Mauserstrasse 3,
D-7000 Stuttgart 30 (DE)**

(72) Erfinder: **Storz, Werner, Wagnerstrasse 4,
D-7141 Benningen (DE)**

(74) Vertreter: **Wilhelm, Hans-Herbert, Dr.-Ing. et al, Wilhelm
& Dauster Patentanwälte Hospitalstrasse 8,
D-7000 Stuttgart 1 (DE)**

ACTORUM AG

**Beschreibung**

Die Erfindung betrifft eine Flüssigkeitsreibungskupplung gemäss dem Oberbegriff von Patentanspruch 1.

Flüssigkeitsreibungskupplungen dieser Art sind nach der FR-A 2 315 000 bekannt. Solche Kupplungen weisen den Vorteil auf, dass die Drehzahl temperaturabhängig gesteuert werden kann, so dass beispielsweise die Leistung eines mit der Kupplung verbundenen Kühllüfters an den Kühlluftbedarf eines Motors angepasst werden kann. Bei der bekannten Bauart wird über eine zusätzliche Öffnung in der Zwischenwand Kupplungsöl auf die von der Zwischenwand abgewandte Seite der Kupplungsscheibe gebracht. Bekannt ist nach der EP-A 70 111 auch eine Bauart, deren Drehzahl nicht temperaturabhängig, sondern drehmomentabhängig steuerbar ist. Durch eine im Aussenbereich liegende Öffnung strömt Kupplungsflüssigkeit drehmomentabhängig in den Arbeitsraum herein oder aus diesem heraus. Um sicherzustellen, dass eine gewünschte Leerlaufdrehzahl erreicht wird, muss der Durchmesser einer dort zusätzlich vorgesehenen Lecköffnung verhältnismässig gross sein, wenn ein grösserer Durchfluss an Kupplungsflüssigkeit aufrecht erhalten werden soll. Bei einer Veränderung des Durchmessers dieser zusätzlichen Zuflussbohrung lässt sich aber, da eine gleichmässige Benetzung der Kupplungsscheibe nicht erreicht werden kann, nicht vermeiden, dass, insbesondere beim Zuschalten der Kupplung, eine unerwünschte sprunghafte Änderung der Drehzahl eintritt.

Der Erfindung liegt die Aufgabe zugrunde, eine Erhöhung der Grundleerlaufdrehzahl bei einer temperaturabhängig gesteuerten Kupplung der eingangs genannten Art ohne grossen Bauaufwand zu erreichen, ohne dass ein sprunghafter Anstieg der Drehzahl bei Freigabe der steuerbaren Zuflussöffnung zu befürchten ist.

Zur Lösung dieser Aufgabe werden bei einer Flüssigkeitsreibungskupplung der eingangs genannten Art die kennzeichnenden Merkmale des Patentanspruches 1 vorgesehen. Durch diese Ausgestaltung kann eine gleichmässige Benetzung der Kupplungsscheibe im Leerlauf, aber auch bei Erhöhung der Drehzahl sichergestellt werden. Dabei besteht wegen der Beschränkung der Durchmesser der Leckölbohrungen nicht die Gefahr, dass Kupplungsflüssigkeit unkontrolliert in den Arbeitsraum hereingerissen wird, was zu unerwünschten sprunghaften, unkontrollierbaren Änderungen in der Drehzahl der Kupplung führt und allgemein als «Sägen» bezeichnet wird.

Der erzeugte Ölkreislauf ist weitgehend unabhängig von der Lufttemperatur. Die Lecköffnungen können in einfacher Weise auch nachträglich an schon vorhandenen Kupplungsausführungen angebracht werden. Als besonders vorteilhaft hat sich ein Durchmesser der Leckbohrungen von 1,5 bis 2,8 mm erwiesen, wobei die kinematische Zähigkeit der Kupplungsflüssigkeit im Bereich von 30 000 bis 50 000 cST (centi Stokes) liegt.

Weitere Merkmale und Vorteile der erfindungsgemässen Kupplung ergeben sich aus den Unteransprüchen und aus der nachfolgenden Beschreibung von Ausführungsbeispielen, die in der Zeichnung dargestellt sind. Es zeigen:

Fig. 1 einen schematischen Längsschnitt durch eine neue Flüssigkeitsreibungskupplung mit Leck-öffnungen in der Zwischenwand zwischen Arbeits- und Vorratsraum,

Fig. 2 die vergrösserte Ansicht der in der Fig. 1 als Zwischenwand vorgesehenen Zwischenscheibe, jedoch ohne die temperaturabhängig wirkende Steuereinrichtung,

Fig. 3 einen schematischen Schnitt durch eine andere Ausführung der Erfindung bei einer Flüssigkeitsreibungskupplung mit einer Topfscheibe anstelle der in Fig. 1 vorgesehenen flachen Kupplungsscheibe und

Fig. 4 die schematische Seitenansicht der Topfscheibe der Ausführung der Fig. 3.

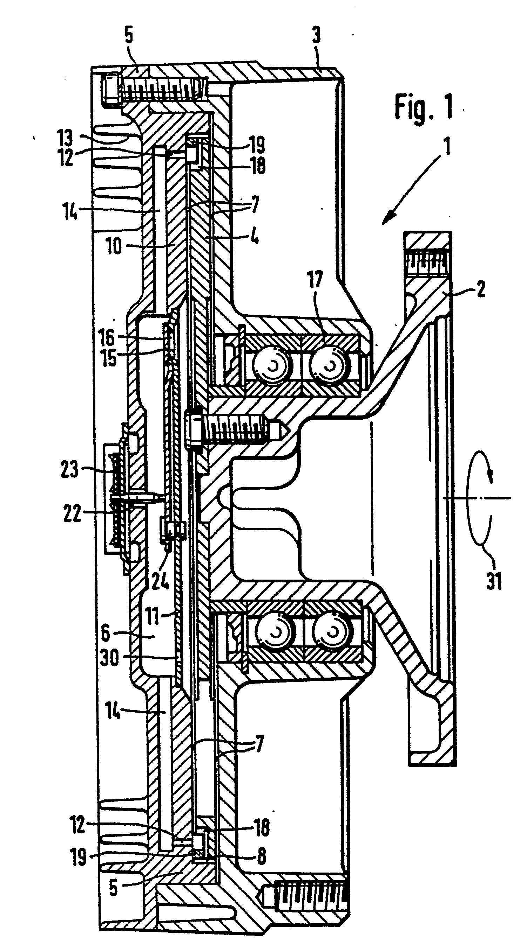

In der Fig. 1 ist eine Flüssigkeitsreibungskupplung 1 dargestellt, die aus einem den Primärteil bildenden angetriebenen Flansch mit einer fest angeschraubten Kupplungsscheibe 4 und aus einem über das Kugellager 17 drehbar auf dem Antriebsflansch 2 gelagerten Sekundärteil 3 besteht, der als ein Gehäuse für die Aufnahme eines Arbeitsraumes 7 und eines Vorratsraumes 6 für eine bestimmte Menge an Kupplungsflüssigkeit dient. Dieser Raum wird dadurch geschaffen, dass ein Deckel 5 auf den drehbar gelagerten Teil aufgeschraubt ist, der mit einer den Arbeitsraum 7 bildenden Ausnehmung versehen ist, die der Dicke der Kupplungsscheibe 4 so angepasst ist, dass diese sich frei in dem Raum 7 drehen kann. Der Arbeitsraum 7 ist von dem Vorratsraum 6 durch eine Zwischenwand 10 getrennt, die Teil des Deckels 5 ist. In der Zwischenwand 10, die mit einer eingesetzten dünneren Zwischenscheibe 11 versehen ist, ist einmal eine Zuführöffnung 16 für die Kupplungsflüssigkeit vom Vorratsraum 6 zum Arbeitsraum 7 vorgesehen und zum anderen zwei Durchlassbohrungen 12, die jeweils in radial verlaufende Kanäle 14 übergehen, die in den Vorratsraum 6 münden. Die Zuführöffnung 16 wird durch einen Schliesshebel 15 verschlossen bzw. geöffnet, der temperaturabhängig über einen Betätigungsstift 22 von einem Bimetallstreifen 23 aus um seine Anlenkstelle 24 geschwenkt wird, der dabei die Verbindung vom Vorratsraum 6 zum Arbeitsraum 7 mehr oder weniger freigibt. Die Kupplungsscheibe 4 ist im Bereich ihres äusseren Umfanges mit einer umlaufenden und nach aussen offenen Nut 18 versehen, in die Staukörper 19 hereinragen, die an der Zwischenwand 10 befestigt sind. Der Rückfluss der Kupplungsflüssigkeit aus dem Arbeitsraum 7 erfolgt – bedingt durch die Rotation der Teile 4 und 10 gegeneinander – über die Durchlassbohrung 12 in den Vorratsraum 6.

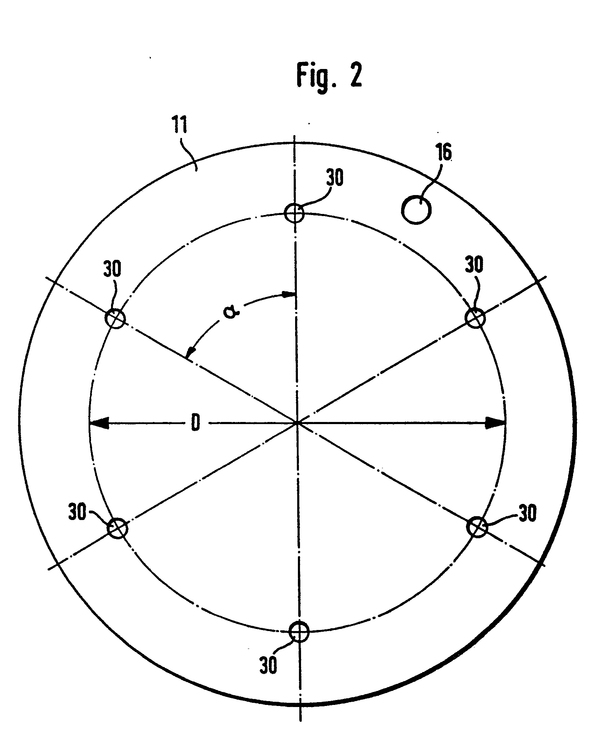

Wie insbesondere Fig. 2 entnommen werden

kann, sind in der Zwischenscheibe 11 sechs Lecköffnungen 30 vorgesehen, die jeweils um einen Winkel von 60° in Umfangsrichtung gegeneinander versetzt, aber auf einem gleichen Durchmesser angeordnet sind. Die Grösse der Lecköffnungen 30 und der Durchmesser, auf dem sie angeordnet werden, wird abhängig von der gewünschten Rückflussmenge festgelegt, die aber auch kupplungsspezifisch von der in der Kupplung vorhandenen Kupplungsflüssigkeitsmenge und von der Art der verwendeten Flüssigkeit abhängt, die bei der Rotation des Gehäuses 3 und des Gehäusedeckels 5 einen Flüssigkeitsring in dem Vorratsraum 6 bildet. Als besonders vorteilhaft hat sich ein Durchmesser 1,5 bis 2,8 mm für die als Bohrungen ausgeführten Lecköffnungen 30 erwiesen. Durch die gleichmässige Verteilung der Lecköffnungen 30 auf dem Umfang wird erreicht, dass die Kupplungsscheibe 4 gleichmässig auf ihrer Oberfläche benetzt wird, auch wenn der Rücklauf nur durch eine Rücklaufbohrung 12 oder, wie beim Ausführungsbeispiel, durch zwei diametral gegenüberliegende Rücklaufbohrungen 12 erfolgt. Durch die Lecköffnungen 30 findet auch ein Kupplungsflüssigkeitskreislauf statt, wenn die Öffnung 16 von dem Verschlusshebel 15 vollkommen abgedeckt ist. Der Kupplungsflüssigkeitskreislauf ist daher unabhängig von der Temperatursteuerung über den Bimetallstreifen 23.

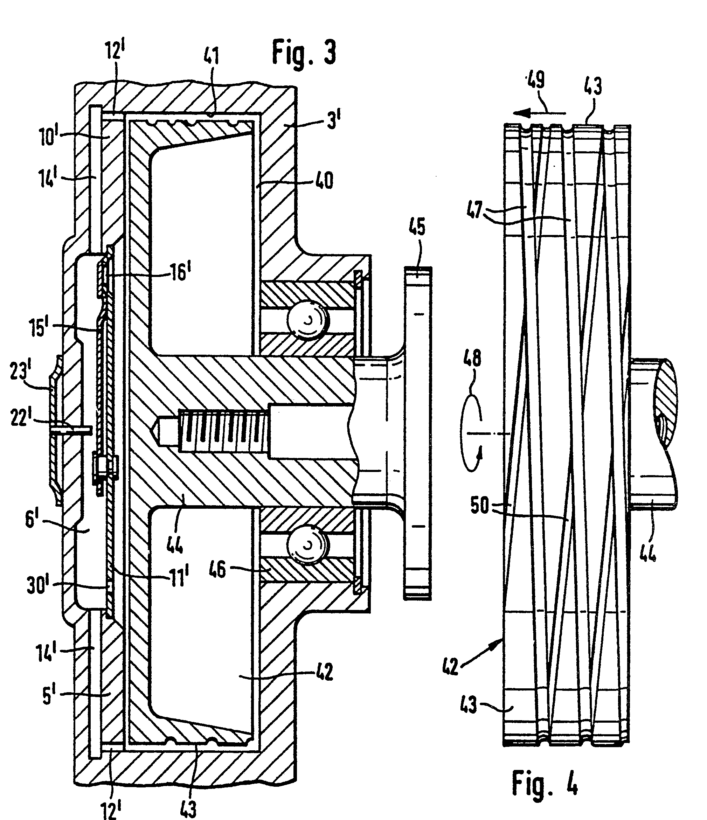

Das Ausführungsbeispiel der Fig. 3 entspricht zunächst im Gesamtaufbau der Ausführung der Fig. 1. Gleiche oder gleichwirkende Teile sind daher in Fig. 3 mit den gleichen Bezugsziffern wie in Fig. 1, jedoch zusätzlich mit einem Strich, gekennzeichnet. Die in Fig. 3 dargestellte Flüssigkeitsreibungskupplung weist jedoch einen Sekundärteil 3' auf, der insofern von jenem der Ausführungsform der Fig. 1 abweicht, als die Arbeitskammer 40 beim Ausführungsbeispiel der Fig. 3 mit einer zylindrischen Aussenwand 41 versehen ist, um mit der topfartig ausgebildeten Kupplungsscheibe 42 zusammenarbeiten zu können. Der Sekundärteil 3' ist jedoch, ebenso wie beim Ausführungsbeispiel der Fig. 1, mit einem Vorratsraum 6' für eine bestimmte Menge an Kupplungsflüssigkeit versehen. Dieser Raum wird durch einen Deckel 5' gebildet, der mit dem Sekundärteil 3' verbunden ist. Der Arbeitsraum 40 ist von dem Vorratsraum 6' durch die Zwischenwand 10' getrennt, in die eine dünnere Zwischenscheibe 11' sitzt, deren Zufuhröffnung 16' zum Arbeitsraum 40 durch einen Schliesshebel 15' verschliessbar ist, der wiederum über einen Schaltstift 22' und einen Bimetallstreifen 23' steuerbar ist. In der Zwischenscheibe 11 sind Lecköffnungen 30' vorgesehen, durch die – unabhängig von der Stellung des Schliesshebels 15' – stets eine gewisse Menge der Kupplungsflüssigkeit zwischen Vorratsraum 6' und Arbeitskammer 40 durchtreten kann.

Anders als beim Ausführungsbeispiel der Fig. 1 besitzt die topfförmige Kupplungsscheibe 42 eine zylindrische Aussenwandung 43, die mit der zylindrischen Innenwandung 41 der Arbeitskammer 40 zusammenarbeitet. Durch den dünnen zylindrischen Spalt zwischen den Wandungen 43 und 41 kann das Drehmoment zwischen der angetriebenen Kupplungsscheibe 42, die zu diesem Zweck über ihre Nabe 44 mit einem Flansch 45 in Verbindung steht, an den Sekundärteil 3' übertragen werden, der seinerseits drehbar auf der Nabe 44 mit einem Kugellager 46 gelagert ist, aber natürlich auch an einem anderen mit der Nabe 44 in Verbindung stehenden Teil gelagert sein kann. Solche topfförmige Kupplungsscheiben sind zwar im Prinzip bekannt. Bekannt ist auch, dass gemäss Fig. 4 auf der zylindrischen Aussenwand 43 dieser Kupplungsscheibe 42 schraubenförmig verlaufende Nuten 47 angeordnet sind, durch die bei einer Drehung der Kupplungsscheibe 42 im Sinne des Pfeiles 48 Kupplungsflüssigkeit in dem Spalt zwischen der Zylinderwandung 41 und der Aussenwand 43 der Kupplungsscheibe 42 in Richtung des Pfeiles 49 gefördert wird, die dann durch die Bohrungen 12' und die Kanäle 14' wieder in die Vorratskammer 6' zurückgefördert wird. Im Gegensatz zu solchen bekannten Ausführungen ist jedoch beim Ausführungsbeispiel der Fig. 3 und 4 bei einer Flüssigkeitsreibungskupplung, die in der Zwischenwand 11' zwischen der Vorratskammer 6' und der Arbeitskammer 40 Lecköffnungen 30' besitzt, von denen mehrere auf dem Umfang verteilt angeordnet sind, auf der zylindrischen Fläche 43 der Kupplungsscheibe 42 eine Schraubennut 50 angeordnet, die gegenläufig zu den Schraubennuten 47 verläuft. Die Tiefe der Schraubennut 50 ist auch kleiner als die Tiefe der Schraubennuten 47, so dass bei der Drehung der Kupplungsscheibe 42 nur ein geringerer Anteil von Kupplungsflüssigkeit in der Schraubennut 50 gegenläufig, d.h. entgegen dem Pfeil 49, gefördert wird. Diese neue gegenläufige Schraubennut 50 bringt in Verbindung mit den Lecköffnungen 30' in der Zwischenscheibe 11' den Vorteil, dass die Leerlaufdrehzahl bei Flüssigkeitsreibungskupplungen mit topfförmiger Kupplungsscheibe 42 angehoben werden kann. Durch die gegenläufige Schraubennut 50 wird die Kupplungsflüssigkeit, beispielsweise Kupplungsöl, welches durch die Lecköloffnungen 30' von der Vorratskammer 6' in die Arbeitskammer 40 fliesst, nicht so schnell durch die Schraubennuten 47 wieder abgepumpt, sondern verweilt etwas länger in dem Arbeitsspalt zwischen den zylindrischen Wandungen 41 und 43, so dass die Drehzahl der Kupplung bei geschlossenem Ventilhebel 15' angehoben wird. Werden daher solche Flüssigkeitsreibungskupplungen für Kühllüfter eingesetzt, so kann damit auch die Kühlleistung angehoben werden.

Beim dargestellten Ausführungsbeispiel ist die gegenläufige Schraubennut 50 zweigängig und erstreckt sich über einen Umfangswinkel von 360°. Ihre Tiefe ist etwa halb so gross wie die Tiefe der Schraubennut 47.

## Patentansprüche

1. Flüssigkeitsreibungskupplung, bestehend aus einem in einem Gehäuse angeordneten Arbeitsraum (7) und einem von diesem durch eine Zwischenwand (10) getrennten Vorratsraum (6) für eine Kupplungsflüssigkeit, die durch eine steuerbare Zuflussöffnung 16, in einer in die Zwischenwand (10) eingesetzten Zwischenscheibe (11) vom Vorratsraum (6) in den Arbeitsraum (7) eintreten kann, aus einer im Arbeitsraum umlaufenden, angetriebenen Kupplungsscheibe 4, der im Bereich des äusseren Umfanges eine in der Zwischenwand (10) vorgesehene Durchlassbohrung (12) zur Rückführung der Kupplungsflüssigkeit in den Vorratsraum (6) zugeordnet ist, sowie aus einer in der Zwischenscheibe (11) zusätzlich vorgesehenen, in einem radial innerhalb der Durchlassbohrung (12) liegenden Bereich angeordneten Strömungspassage, deren Querschnitt die Leerlaufdrehzahl bestimmt, dadurch gekennzeichnet, dass die Strömungspassage aus mehreren Leck-öffnungen (30) mit einem Durchmesser von jeweils maximal 3 mm besteht, die gleichmässig in Umfangsrichtung in der Zwischenscheibe (11) verteilt angeordnet sind.

2. Flüssigkeitsreibungskupplung nach Anspruch 1, dadurch gekennzeichnet, dass drei bis zehn Lecköffnungen (30) vorgesehen sind.

3. Flüssigkeitsreibungskupplung nach einem der Ansprüche 1 und 2, dadurch gekennzeichnet, dass die Lecköffnungen (30) in unterschiedlichen Abständen zur Drehachse angeordnet sind.

4. Flüssigkeitsreibungskupplung nach einem der Ansprüche 1 bis 3, dadurch gekennzeichnet, dass die Lecköffnungen (30) jeweils einen Durchmesser von 1,5 bis 2,8 mm aufweisen.

5. Flüssigkeitsreibungskupplung nach Anspruch 1 mit einer topfförmigen Kupplungsscheibe (42), deren zylindrische Umfangsflächen (43) mit schraubenförmig verlaufenden Nuten (47) zur Rückführung der in dem Spalt zwischen der Umfangsfläche und einer zylindrischen Aussenwand (41) im Sekundärteil befindlichen Kupplungsflüssigkeit versehen ist, dadurch gekennzeichnet, dass mindestens eine gegenläufig zu den Nuten (47) verlaufende Schraubennut (50) an der Umfangsfläche (43) vorgesehen ist.

6. Flüssigkeitsreibungskupplung nach Anspruch 5, dadurch gekennzeichnet, dass die gegenläufige Schraubennut (50) eine geringere Tiefe als die Nuten (47) aufweist.

7. Flüssigkeitsreibungskupplung nach Anspruch 5 und 6, dadurch gekennzeichnet, dass die Nuten (47) dreigängig über einen Umfangswinkel von etwa 360° und die gegenläufige Schraubennut (50) zweigängig über einen Umfangswinkel von 360° ausgebildet sind.

## Claims

1. Fluid friction clutch consisting in a working chamber (7) disposed in a housing and in a supply chamber (6) separated from it by an intermediate wall (10), for a clutch fluid which can enter the working chamber (7) from the supply chamber (6) through a controllable inflow opening (16) in an intermediate disc (11) inserted into the intermediate wall (10), consisting alos in a driven clutch disc (4) rotating in the working chamber, with which disc (4), in the region of the outer cricumference, a passage opening (12) is associated for returning the clutch fluid into the supply chamber (6), and consisting furthermore in a flow passage additionally provided in the intermediate disc (11), disposed in a region situated radially inside the passage opening (12), the cross-section of the flow passage determining the idle-running speed, characterised in that the flow passage consists of several leak openings (30) with a diameter which is of a maximum of 3 mm in each instance, which openings are evenly distributed in the circumferential direction in the intermediate disc (11).

2. Fluid friction clutch according to Claim 1, characterised in that three to ten leak openings (30) are provided.

3. Fluid friction clutch according to one of Claims 1 and 2, characterised in that the leak openings (30) are disposed at differing distances from the axis of rotation.

4. Fluid friction clutch according to one of Claims 1 to 3, characterised in that the leak openings (30) have in each case a diameter of 1.5 to 2.8 mm.

5. Fluid friction clutch according to Claim 1 with a cup-shaped clutch disc (42) the cylindrical circumferential surface (43) of which is provided with helically extending grooves (47) to return the clutch fluid present in the gap between the circumferential surface and a cylindrical outer wall (41) in the secondary part, characterised in that at least one helical groove (50) is provided on the circumferential surface (43) in counterflow to the grooves (47)

6. Fluid friction clutch according to Claim 5, characterised in that the counterflowing helical groove (50) has a smaller depth than the grooves (47).

7. Fluid friction clutch according to Claims 5 and 6, characterised in that the grooves (47) are designed treble-twisted over a circumferential angle of about 360° and the counterflow grooves (50) are designed double-twisted over a circumferential angle of 360°.

## Revendications

1. Embrayage à cisaillement de fluide, se composant d'une chambre de travail (7) disposée dans un carter et d'une chambre de stockage (6), séparée de celle-ci par une paroi intermédiaire (10), pour un liquide d'embrayage, qui peut pénétrer de la chambre de stockage (6) dans la chambre de travail (7) par l'intermédiaire d'un orifice d'admission (16), pouvant être commandé et ménagé dans un disque intermédiaire (11) encastré dans la paroi intermédiaire (10), d'un disque entraîné d'embrayage (4), tournant dans la chambre de travail et auquel est associé, dans une zone de sa périphérie extérieure, un trou de traversée (12) ménagé dans la paroi intermédiaire (10) et assurant le reflux du liquide d'embrayage dans la chambre de stockage (6), ainsi que d'un passage d'écoulement, prévu additionnellement dans le disque intermédiaire (11), situé dans une zone placée radialement à l'intérieur du trou de traversée (12) et dont la section détermine la vitesse de ralenti, caractérisé en ce que le passage d'écoulement se compose de plusieurs orifices de fuite (30) ayant chacun un diamètre maximal de 3 mm et qui sont répartis uniformément dans une direction circonférentielle dans le disque intermédiaire (11).

2. Embrayage à cisaillement de fluide selon la revendication 1, caractérisé en ce qu'il est prévu de trois à dix orifices de fuite (30).

3. Embrayage à cisaillement de fluide selon l'une des revendications 1 et 2, caractérisé en ce que les orifices de fuite (30) sont disposés à des distances différentes de l'axe de rotation.

4. Embrayage à cisaillement de fluide selon l'une des revendications 1 à 3, caractérisé en ce que les orifices de fuite (30) ont chacun un diamètre de 1,5 à 2,8 mm.

5. Embrayage à cisaillement de fluide selon la revendication 1, comportant un disque d'embrayage (42) en forme de pot, dont la surface périphérique cylindrique est pourvue de rainures de forme hélicoïdale (47) servant au reflux du liquide d'embrayage se trouvant dans l'intervalle existant entre la surface periphérique et une paroi extérieure cylindrique (41) dans la partie secondaire, caractérisé en ce qu'il est prévu dans la surface périphérique (43) au moins un rainure hélicoïdale (50) orientée en sens inverse des rainures (47).

6. Embrayage à cisaillement de fluide selon la revendication 5, caractérisé en ce que la rainure hélicoïdale en sens inverse (50) a une profondeur plus petite que les rainures (47).

7. Embrayage à cisaillement de fluide selon la revendication 5 et la revendication 6, caractérisé en ce que les rainures (47) sont réalisées avec trois spires sur un angle de périphérie d'environ 360° tandis que la rainure hélicoïdale en sens inverse (50) est réalisée avec deux spires sur un angle de périphérie de 360°.

Fig. 1

# Fig. 2

## Fig. 3

## Fig. 4